# EUROPEAN PATENT APPLICATION

(11) **EP 4 477 848 A1**
(43) Date of publication of application: **18.12.2024**
(21) Application number: 23766715.9
(22) Date of filing: 02.03.2023
(51) Int. Cl.: F01N 3/022, B01D 39/20, B01D 46/00, B01J 35/04, C04B 35/569, C04B 38/00

(54) **SILICON CARBIDE HONEYCOMB FILTER**

(30) Priority: 10.03.2022 JP 2022037608
(71) Applicant: Proterial, Ltd., Tokyo 135-0061 (JP)
(72) Inventor: OKAZAKI, Shunji, Miyako-gun, Fukuoka 800-0393 (JP)
(74) Representative: Diehl & Partner
(86) International application number: PCT/JP2023/007925
(87) International publication number: WO 2023/171539

(57) **Abstract**

A silicon carbide honeycomb filter constituted by honeycomb segments each comprising cell walls forming cells defining pluralities of flow paths, plugs sealing end surfaces of the cells alternately in a checkerboard pattern, and an outer peripheral wall, bonding material layers filling lattice gaps between the honeycomb segments for bonding them, and a skin layer enclosing the bonded honeycomb segments, the lattice gaps being provided with a bonding-material-free region extending in four directions from a center intersection to adjacent intersections, wherein the center intersection is an intersection located at the center axis of the honeycomb filter or its nearby position, among the intersections of the lattice gaps.

## Description

### FIELD OF THE INVENTION

The present invention relates to a silicon carbide honeycomb filter for cleaning exhaust gases by removing particulate matter (PM), etc. from exhaust gases discharged from internal combustion engines such as diesel engines.

### BACKGROUND OF THE INVENTION

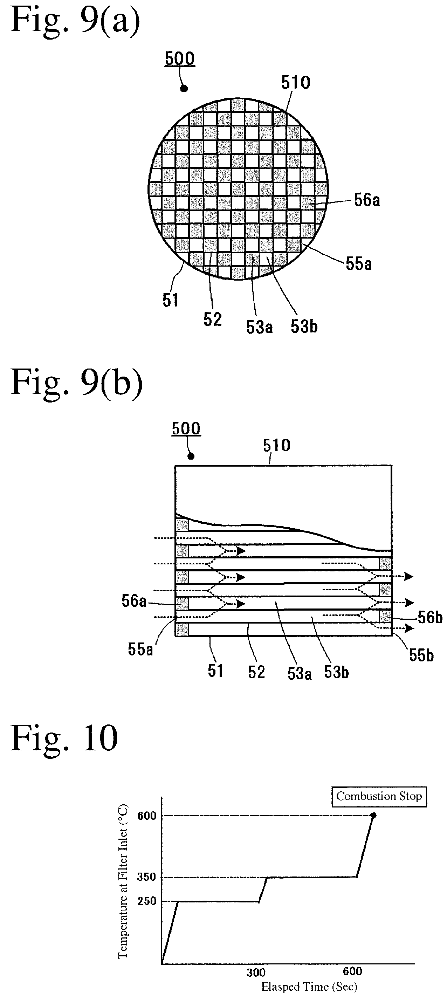

Because NOx and PM contained in exhaust gases of diesel engines are likely to adversely affect humans and environment when discharged into the air, a honeycomb structure carrying a NOx catalyst, and a ceramic honeycomb filter for capturing PM have conventionally been attached to a discharge pipe of the diesel engine. An example of ceramic honeycomb filters for capturing PM in exhaust gases is shown in Figs. 9(a) and 9(b). A ceramic honeycomb filter 500 is constituted by a ceramic honeycomb structure 510 comprising porous cell walls 52 forming large numbers of flow paths 53a, 53b and an outer peripheral wall 51, and upstream-side plugs 56a and downstream-side plugs 56b sealing the exhaust-gas-introducing end surface 55a and exhaust-gas-discharging end surface 55b of the flow paths 53a, 53b alternately in a checkerboard pattern. As shown by dotted arrows in Fig. 9(b), an exhaust gas flows into the outlet-plugged flow paths 53b open on the exhaust-gas-introducing end surface 55a, passes through communicating pores on and in the cell walls 52, flows into adjacent inlet-plugged flow paths 53a, and flows out from the exhaust-gas-discharging end surface 55b. While the exhaust gas passes through communicating pores on and in the cell walls 52, PM in the exhaust gas is captured, so that the exhaust gas is cleaned. By burning the captured PM that has reached a predetermined accumulation level, the ceramic honeycomb structure is regenerated. Because the use environment of such ceramic honeycomb structure has become increasingly severe, refractory ceramics such as silicon carbide (SiC) having excellent heat shock resistance have become used as its material.

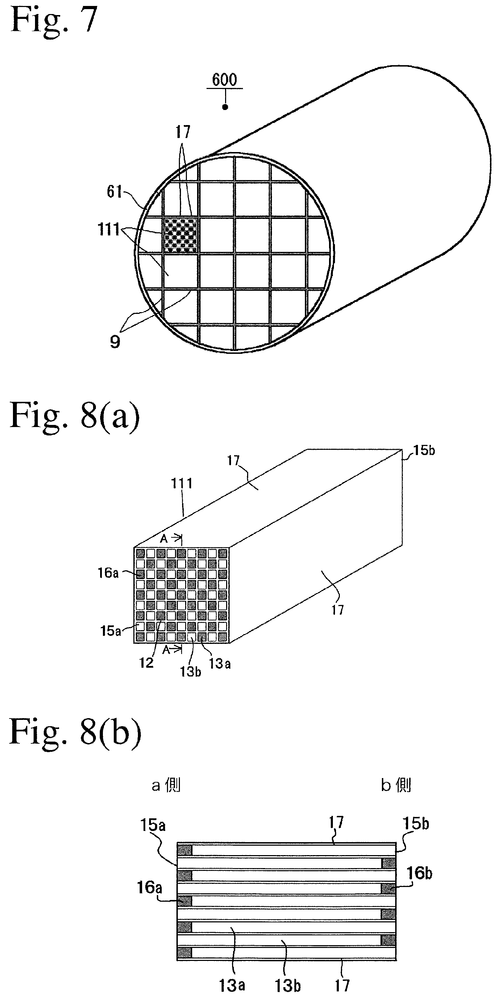

The ceramic honeycomb structure may be subjected to thermal stress by an uneven internal temperature distribution due to thermal shock occurring by the uneven burning of PM during regeneration, the rapid temperature change of an exhaust gas, etc., so that it suffers cracking, breakage, melting, etc. To cope with such problems, as shown in Fig. 7, a proposal was made to provide a ceramic honeycomb filter 600 constituted by integrally bonding pluralities of rectangular-cross-sectioned honeycomb segments 111 as shown in Fig. 8 with bonding material layers 9 for alleviating the thermal stress.

For example, Patent Reference 1 discloses a ceramic honeycomb structure constituted by pluralities of honeycomb segments integrally bonded via bonding material layers comprising at least inorganic fibers, an inorganic binder, an organic binder and inorganic particles, each honeycomb segment having pluralities of longitudinally aligned flow paths, end surfaces of these flow paths being sealed alternately in a checkerboard pattern such that the flow paths are open oppositely on the gas inlet and outlet sides, and adjacent flow paths being communicating with each other via porous cell walls.

A ceramic honeycomb structure constituted by pluralities of such honeycomb segments has a function of dispersing thermal stress, but it suffers from a problem that cracking likely occurs in the bonding material layers near the outer peripheral wall by a high-temperature heat treatment when carrying an oxidation catalyst on the honeycomb structure, or by the rapid temperature change of an exhaust gas during driving.

To solve this problem, Patent Reference 2 discloses a honeycomb structure comprising a honeycomb segment assembly constituted by pluralities of honeycomb segments integrally bonded via bonding material layers, and an outer peripheral coating layer covering an outer peripheral surface of the honeycomb segment assembly, each honeycomb segment having a structure in which pluralities of cells forming exhaust gas flow paths are aligned in parallel with the center axis of the honeycomb segment, and the honeycomb segments being bonded via partial bonding material layers.

In the ceramic honeycomb structure of Patent Reference 2, however, heat conduction is low between the honeycomb segments, because the bonding material layers are formed only in predetermined portions of lattice gaps between the honeycomb segments so that bonding surfaces of the honeycomb segments not covered with the bonding material layers exist substantially in the entire honeycomb structure. Therefore, when the ceramic honeycomb structure is regenerated, heat locally generated by the burning of unevenly accumulated PM is not well conducted to adj acent honeycomb segments, resulting in insufficient dispersion and alleviation of thermal stress, and thus likely causing cracking.

Patent Reference 3 discloses a honeycomb structure comprising pluralities of rectangularly columnar honeycomb segments arranged in a lattice pattern, bonding material layers bonding side surfaces of the honeycomb segments, and an outer peripheral wall formed for covering the honeycomb segments, each honeycomb segment comprising porous cell walls surrounding pluralities of cells longitudinally extending from an inlet end surface to an outlet end surface, and an outer wall surrounding the cell walls, end portions of the cells on either one of the inlet and outlet end surfaces being sealed by plugs, one or all of intersections of the lattice-arranged bonding material layers being provided with longitudinally extending bottomed hollow gaps, a ratio of the longitudinal depth of the gaps to the longitudinal length of the honeycomb segment being 5% or more, and a ratio of the opening diameters of the gaps to the thickness of the bonding material layers being 10-140%. Patent Reference 3 describes that this structure can suppress the propagation of cracking generated in the bonding material layers.

In Examples of Patent Reference 3, all intersections are provided with gaps when the ratio of the gap depth to the honeycomb segment length is as small as 5-20%, but only part of the intersections are provided with gaps when the ratio is as large as 50-80%. Thus, there are no Examples in which all intersections are provided with deep gaps.

Also, the gaps described in Patent Reference 3 have only a circular cross section, and are formed by cylindrical timbers in Examples. When cylindrical timbers are placed in the intersections of the lattice gaps between the honeycomb segments, the upper limit of the diameter of each cylindrical timber is about 140%, because it is 2^{1/2} times the thickness of the bonding material layers. However, because of dimensional tolerance in side surfaces of the honeycomb segments, it is practically impossible to place cylindrical timbers having diameters as large as 2^{1/2} times the thickness of the bonding material layers in the intersections of the lattice gaps. As a result, the upper limit of the diameter of the cylindrical timber should be considerably smaller than 140%. In addition, even if the cylindrical timbers have diameters as large as 140% the thickness of the bonding material layers, gaps formed by the cylindrical timbers have too small cross section areas to sufficiently suppress cracking.

Because of the above structural problems, it has been found that the honeycomb structure of Patent Reference 3 is insufficient for the dispersion and alleviation of thermal stress, failing to sufficiently suppress cracking.

### PRIOR ART REFERENCES

Patent Reference 1: JP 8-28246 A
Patent Reference 2: JP 2006-326381 A
Patent Reference 3: JP 2019-171238 A

### OBJECT OF THE INVENTION

Accordingly, an object of the present invention is to provide a silicon carbide honeycomb filter which can suppress the generation and propagation of cracking occurring by thermal shock due to local heat generation and the rapid temperature change of an exhaust gas, etc., while maintaining heat conduction between honeycomb segments.

### SUMMARY OF THE INVENTION

To achieve the above object, it has been found that (a) a sufficient bonding-material-free region should be arranged in a center portion of a honeycomb filter in which the dispersion and alleviation of thermal stress is particularly important, and (b) when vacant spaces are disposed in the intersections of the lattice-arranged bonding material layers, their sizes should be sufficiently large. As a result of intensive research based on the above findings, the inventor has found that with respect to (a) the bonding-material-free region in the center portion, when it has a shape extending in a cross pattern from the center axis of a honeycomb filter along the lattice-arranged bonding material layers between the honeycomb segments, the maximum effect of dispersing and alleviating thermal stress can be exhibited, while maintaining heat conduction between the honeycomb segments, and that with respect to (b) the vacant intersection spaces, when bonding-material-free spaces are arranged in square intersections defined by linear chamfers formed at the corners of the honeycomb segments, in a cross section perpendicular to the flow paths, the maximum effect of dispersing and alleviating thermal stress can be exhibited, while maintaining heat conduction between the honeycomb segments. The present invention has been completed based on the above findings.

Thus, the first silicon carbide honeycomb filter of the present invention is constituted by honeycomb segments each comprising cell walls forming cells defining pluralities of flow paths longitudinally extending between both end surfaces, plugs sealing end surfaces of the cells alternately in a checkerboard pattern, and an outer peripheral wall, bonding material layers filling lattice gaps between the honeycomb segments for bonding them, and a skin layer enclosing the bonded honeycomb segments,
the lattice gaps being provided with a bonding-material-free region extending in four directions from a center intersection to adjacent intersections, wherein the center intersection is an intersection located at the center axis of the honeycomb filter or its nearby position, among the intersections of the lattice gaps.

The second silicon carbide honeycomb filter of the present invention is constituted by honeycomb segments each comprising cell walls forming cells defining pluralities of flow paths longitudinally extending between both end surfaces, plugs sealing end surfaces of the cells alternately in a checkerboard pattern, and an outer peripheral wall, bonding material layers filling lattice gaps between the honeycomb segments for bonding them, and a skin layer enclosing the bonded honeycomb segments,
a cross section of each honeycomb segment perpendicular to its flow path direction having an octagonal shape obtained by providing a quadrilateral with a chamfer at each corner, which is alternately constituted by first outer peripheral walls corresponding to the sides of the quadrilateral and second outer peripheral walls corresponding to the linear chamfers,
vacant intersection spaces free of the bonding material being formed in the intersections of the lattice gaps between the bonded honeycomb segments, whose contours are formed by the second outer peripheral walls, and
a space ratio (t₂/t₁) defined by a ratio of the diameter t₂ of the vacant intersection space to the thickness t₁ of the bonding material layer between the first outer peripheral walls being more than 1.4.

The third silicon carbide honeycomb filter of the present invention is constituted by honeycomb segments each comprising cell walls forming cells defining pluralities of flow paths longitudinally extending between both end surfaces, plugs sealing end surfaces of the cells alternately in a checkerboard pattern, and an outer peripheral wall, bonding material layers filling lattice gaps between the honeycomb segments for bonding them, and a skin layer enclosing the bonded honeycomb segments,
the lattice gaps being provided with a bonding-material-free region extending in four directions from a center intersection to adjacent intersections, wherein the center intersection is an intersection located at the center axis of the honeycomb filter or its nearby position, among the intersections of the lattice gaps,
a cross section of each honeycomb segment perpendicular to its flow path direction having an octagonal shape obtained by providing a quadrilateral with a chamfer at each corner, which is alternately constituted by first outer peripheral walls corresponding to the sides of the quadrilateral and second outer peripheral walls corresponding to the linear chamfers,
vacant intersection spaces free of the bonding material being formed in the intersections of the lattice gaps between the bonded honeycomb segments, whose contours are formed by the second outer peripheral walls, and
a space ratio (t₂/t₁) defined by a ratio of the diameter t₂ of the vacant intersection space to the thickness t₁ of the bonding material layer between the first outer peripheral walls being more than 1.4.

The vacant intersection spaces preferably occupy 30% or more of all intersections.

The space ratio is preferably 1.5-5.

The outer peripheral wall of each honeycomb segment is preferably thicker than the cell walls.

It is preferable that a cross section of the second outer peripheral wall perpendicular to its flow path direction has a triangular shape constituted by two cell walls extending vertically and horizontally and closest to the second outer peripheral wall and an outer peripheral surface of the second outer peripheral wall, and that the radial maximum thickness of the second outer peripheral wall defined by the distance between the center vertex of the triangular shape and the outer peripheral surface is larger than the thickness of the first outer peripheral wall.

In a cross section perpendicular to the flow path direction, the cross section area of an introducing cell whose outlet-side end surface is sealed is preferably larger than the cross section area of a discharging cell whose inlet-side end surface is sealed.

### EFFECTS OF THE INVENTION

The silicon carbide honeycomb filter of the present invention having the above structure can suppress the generation and propagation of cracking occurring by thermal shock, etc. due to local heat generation and the rapid temperature change of an exhaust gas, while keeping heat conduction between honeycomb segments.

### BRIEF DESCRIPTION OF THE DRAWINGS

Fig. 1 is a perspective view schematically showing an example of the first honeycomb filters of the present invention.
Fig. 2 is a perspective view schematically showing an example of the second honeycomb filters of the present invention.
Fig. 3 is a perspective view schematically showing an example of the third honeycomb filters of the present invention.
Fig. 4(a) is a perspective view schematically showing an example of honeycomb segments used in the honeycomb filter of the present invention.
Fig. 4(b) is a partial front view showing in detail the second outer peripheral wall of the honeycomb segment of Fig. 4(a).
Fig. 5(a) is a partial cross-sectional view showing an example of vacant intersection spaces.
Fig. 5(b) is a partial cross-sectional view showing another example of vacant intersection spaces.
Fig. 5(c) is a partial cross-sectional view showing a further example of vacant intersection spaces.
Fig. 6 is a perspective view schematically showing another example of honeycomb segments.
Fig. 7 is a perspective view schematically showing a ceramic honeycomb filter having a conventional segment-bonded structure.
Fig. 8(a) is a perspective view schematically showing a honeycomb segment.
Fig. 8(b) is a cross-sectional view taken along the line A-A in Fig. 8(a).
Fig. 9(a) is a front view schematically showing an example of conventional ceramic honeycomb filters.
Fig. 9(b) is a longitudinal cross-sectional view schematically showing an example of conventional ceramic honeycomb filters.
Fig. 10 is a graph showing a temperature control in a drop-to-idle test.

### DESCRIPTION OF THE PREFERRED EMBODIMENTS

The present invention will be explained below in detail referring to the drawings without intention of restricting the present invention thereto, and modifications, arrangements or improvements may be added unless they are deviated from the scope of the invention.

### [1] First silicon carbide honeycomb filter

### (1-1) Structure

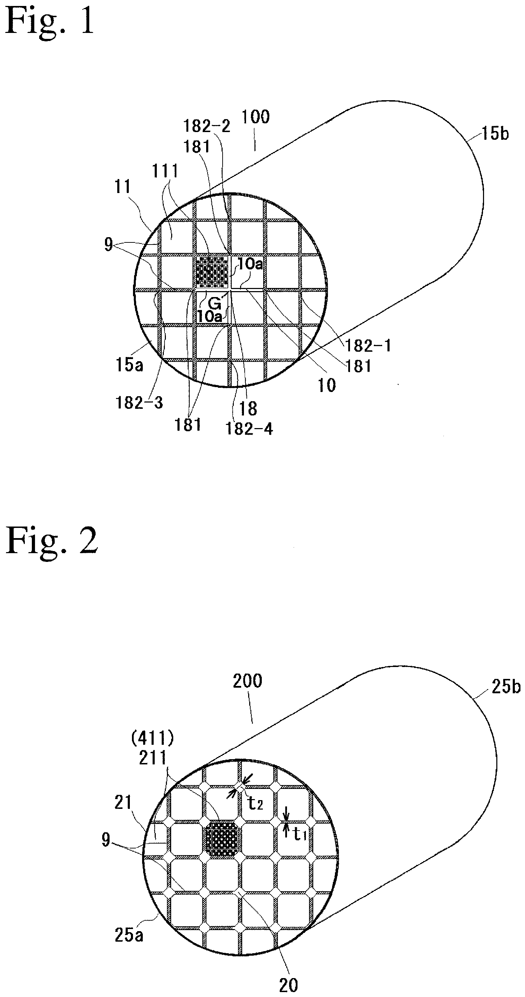

The first silicon carbide honeycomb filter 100 shown in Fig. 1 comprises honeycomb segments 111 arranged via lattice gaps, bonding material layers 9 formed in the lattice gaps for bonding the honeycomb segments 111, and a skin layer 11 enclosing the bonded honeycomb segments 111. As shown in Fig. 8, each honeycomb segment 111 has pluralities of cells 13 extending from one end surface 15a to the other end surface 15b, and cell walls 12 of each cell 13 form a fluid flow path extending from one end surface 15a to the other end surface 15b. End portions of the cells 13 on the side of one end surface 15a are provided with plugs 16a, and end portions on the side of the other end surface 15b are provided with plugs 16b. To avoid both ends of each cell 13 from being sealed by plugs 16a, 16b, the plugs 16a, 16b are arranged alternately in a checkerboard pattern on each end surface 15a, 15b.

Between the honeycomb segments 111 bonded in a lattice pattern, a bonding-material-free region 10 is provided in addition to the bonding material layers 9. When an intersection at the center axis G of the honeycomb filter 100 or its nearby position among the intersections of the lattice gaps is regarded as a center intersection 18 in a cross section perpendicular to the flow paths, the bonding-material-free region 10 is in the shape of a cross extending in four directions from the center intersection 18 along the gaps in a cross section, and extending longitudinally between both end surfaces 15a, 15b. The nearby position of the center axis G means herein that it is located in the range of a circle around the center axis G, the radius of the circle being the length of one side of the honeycomb segment 111.

When an intersection of the lattice gaps is located at the center axis G of the honeycomb filter 100, the center intersection 18 is off course the intersection at the center axis G. However, there is no intersection of the lattice gaps at the center axis G, it should be decided which nearby intersection is regarded as the center intersection 18. In this case, an intersection closest to the center axis G is preferably the center intersection 18, but an intersection other than the closest one may be used as the center intersection 18 unless the effects of the present invention are damaged. Generally, when the honeycomb filter 100 is constituted by honeycomb segments 111 in even number x even number, the center intersection 18 is usually located at the center axis G or its closest position. On the other hand, when the honeycomb filter 100 is constituted by honeycomb segments 111 in odd number x odd number, the center axis G is positioned in a region surrounded by four intersections. In the former case, because the direct distance between an intersection closest to the center axis G and the center axis G is usually sufficiently shorter that those between other intersections and the center axis G, an intersection closest to the center axis G is preferably regarded as the center intersection 18. In the latter case, when there are large differences among the direct distances between four intersections and the center axis G, an intersection closest to the center axis G is preferably regarded as the center intersection 18, but when there are no large differences, one of other intersections may be used as the center intersection 18 unless the effects of the present invention are damaged.

In the example shown in Fig. 1, each branch 10a, 10a, 10a, 10a of the bonding-material-free region 10 extends between the center intersection 18 and its adjacent intersection 181, 181, 181, 181. However, unless the strength of the honeycomb filter 100 is deteriorated, the length of each branch 10a, 10a, 10a, 10a may be expanded to the second next intersection 182-1, 182-2, 182-3, 182-4 from the center intersection 181, if necessary.

With the above structure, there is no bonding material in the center portion of the honeycomb filter 100 which is likely subjected to the highest temperature. Accordingly, even when thermal shock is generated by the burning of unevenly accumulated PM, the rapid temperature change of an exhaust gas, etc., the thermal stress in the honeycomb segments 111 can be alleviated while maintaining heat conduction between the honeycomb segments, thereby making the honeycomb filter 100 resistant to cracking. Further, even when cracking occurs, the propagation of cracking can be suppressed by the bonding-material-free region 10.

The outer peripheral wall 17 of the honeycomb segment 111 thicker than the cell walls 12 preferably provides the honeycomb segment 111 with larger heat capacity, making it resistant to cracking due to thermal shock. The thickness of the outer peripheral wall 17 is preferably 1.3 times or more, more preferably 1.6 times or more, and further preferably 2 times or more the thickness of the cell walls. To avoid increase in pressure loss, the thickness of the outer peripheral wall 17 is preferably 10 times or less, and more preferably 9 times or less the thickness of the cell walls. For example, the thickness range of the outer peripheral wall 17 is preferably 1.3-10 times, more preferably 1.6-9 times, and further preferably 2-9 times the thickness of the cell walls.

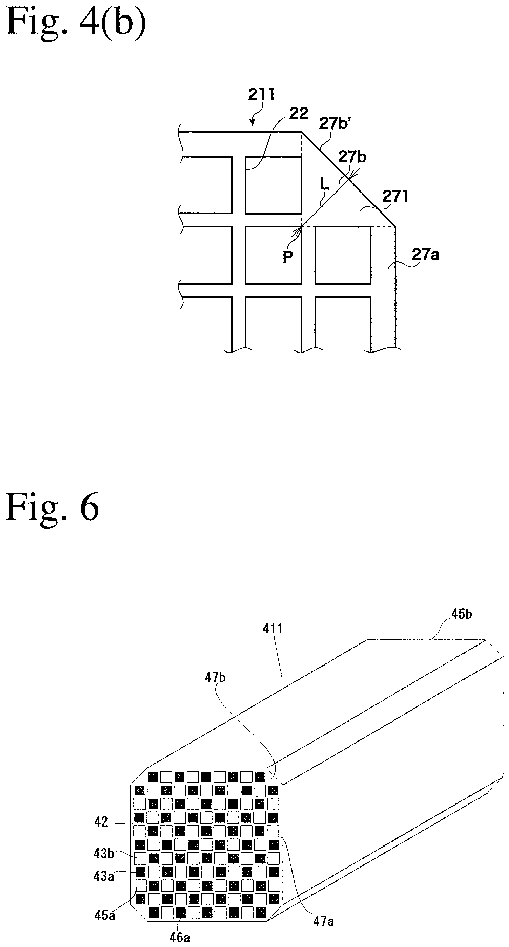

In an example of cell shapes of the honeycomb segment 111, as shown in Fig. 6, a cell 43b having a sealed outlet-side end surface (exhaust-gas-introducing cell) has a larger cross section area than that of a cell 43a having a sealed inlet-side end surface (exhaust-gas-discharging cell), in a cross section of the cell perpendicular to the flow path direction. This can increase the amount of PM accumulated until regeneration starts, while suppressing pressure loss when PM is captured. The cross section area of the exhaust-gas-introducing cell 43b is preferably 1.1-2.0 times, and more preferably 1.2-1.9 times the cross section area of the exhaust-gas-discharging cell 43a.

To prevent PM in the exhaust gas from flowing out without being captured, one or both end surfaces 15a, 15b of the bonding-material-free region 10 are preferably sealed by plugs (not shown).

### (1-2) Production method

### (a) Production of honeycomb segments

100% by mass of a molding material comprising silicon carbide particles, alumina particles and magnesium hydroxide particles is blended with 5-15% by mass of an organic binder. The silicon carbide particles preferably have an average particle diameter of 30-50 µm. Alumina particles and magnesium hydroxide particles are preferably 8-15% by mass in total per 100% by mass of silicon carbide particles.

The organic binder may be methylcellulose, ethylcellulose, ethylmethylcellulose, carboxymethylcellulose, hydroxymethylcellulose, hydroxypropyl methylcellulose, hydroxyethylcellulose, hydroxyethylethylcellulose, etc. Among them, methylcellulose or hydroxypropyl methylcellulose is preferable.

The resultant mixture is blended with water to form a plasticizable moldable material. To provide the moldable material with moldable hardness, the amount of added water is preferably 20-50% by mass per 100% by mass of the molding material.

The moldable material is extruded through a die of a screw-molding machine to form a green body of a honeycomb segment 111 shown in Fig. 8, which is then dried. The die and the extrusion-molding method may be known ones. Though not particularly restrictive, a drying method may be, for example, hot-air drying, microwave-heating drying, high-frequency-heating drying, etc.

After drying, the end surfaces, the outer peripheral surface, etc. are machined if necessary, and then plugs 16a, 16b for sealing the end surfaces 15a, 15b of the cells 13 alternately in a checkerboard pattern are formed by a moldable material having the same composition as that of the honeycomb segment 111. The sealed honeycomb segment 111 is sintered at a temperature of 1100-1350°C in an oxidizing atmosphere to obtain a silicon carbide honeycomb segment 111.

### (b) Production of honeycomb filter

A material (bonding material) for bonding the honeycomb segments 111 contains a bonding material comprising silicon carbide aggregate particles and binder particles, an organic binder, and if necessary an inorganic binder and a pore-forming material. The binder particles are made of at least one selected from the group consisting of aluminum sources, magnesium sources, silica sources and these compounds. The alumina sources may be alumina or aluminum hydroxide, and the magnesium sources may be magnesium oxide or magnesium hydroxide. The total amount of the alumina source particles and the magnesium source particles is preferably 5-25% by mass per 100% by mass of silicon carbide particles.

The organic binder may be the same as used for the production of the honeycomb segments. The amount of the organic binder added is preferably 5-15% by mass per 100% by mass of the bonding material.

The inorganic binder may be colloidal silica, colloidal alumina, etc. The amount of the inorganic binder added is preferably 40% or less by mass per 100% by mass of the bonding material.

The pore-forming material may be foamable resins, foamed resins, carbon, water-absorbing resins, fly ash balloon, etc. Among them, foamable resins or foamed resins having small particle diameter unevenness are preferable. The amount of the pore-forming material added is preferably 2-20% by mass per 100% by mass of the bonding material.

The resultant mixture is blended with water to form a bonding material slurry. The amount of water added is preferably 20-50% by mass per 100% by mass of the bonding material.

With the bonding material slurry applied to the outer peripheral wall 17 of each honeycomb segment 111, as shown in Fig. 1, the honeycomb segments 111 are pressed to each other via a bonding material for bonding, thereby forming a lattice-arranged bonding material layers 9 between the outer peripheral walls 17 of the honeycomb segments 111. To form a bonding-material-free region 10 in gaps between the honeycomb segments 111 in a range from the center intersection 18 to the closest four intersections 181, 181, 181, 181, a plate spacer having the same thickness as that of the bonding material layer 9 and the same length as that of one side of the honeycomb segment 111 is placed in each gap between the honeycomb segments 111 in that range, and the honeycomb segments 111 are then bonded. Because the plate spacer prevents the bonding material from intruding into the gap between the honeycomb segments 111 in the above range, a cross-patterned bonding-material-free region is formed. The plate spacer is preferably made of easily burnable wood, paper or resins.

Though the bonding-material-free region 10 is a cross gap between four intersections 181, 181, 181, 181 in the depicted example, the cross gap may be extended to a range between four intersections 182-1, 182-2, 182-3, 182-4. In this case, a plate spacer is placed in each gap from the intersection 181 to each intersection 182-1, 182-2, 182-3, 182-4 between the honeycomb segments 111. To prevent PM in the exhaust gas from flowing out, plugs (not shown) are preferably formed in the bonding-material-free region 10 on one or both end surfaces 15a, 15b. The depth of the plugs may be 1-2 mm.

After drying the bonding material layers 9 between the honeycomb segments 111, sintering is conducted at a temperature of 1100-1350°C in an oxidizing atmosphere, thereby burning off the plate spacer to form the bonding-material-free region 10. The outer peripheral surface of the sintered body is machined to a circular shape by a lathe, and the resultant circular outer peripheral surface is coated with a skin layer material containing at least silicon carbide particles and an inorganic binder to form a skin layer 11, which is dried to obtain a silicon carbide honeycomb filter.

### [2] Second silicon carbide honeycomb filter

### (2-1) Structure

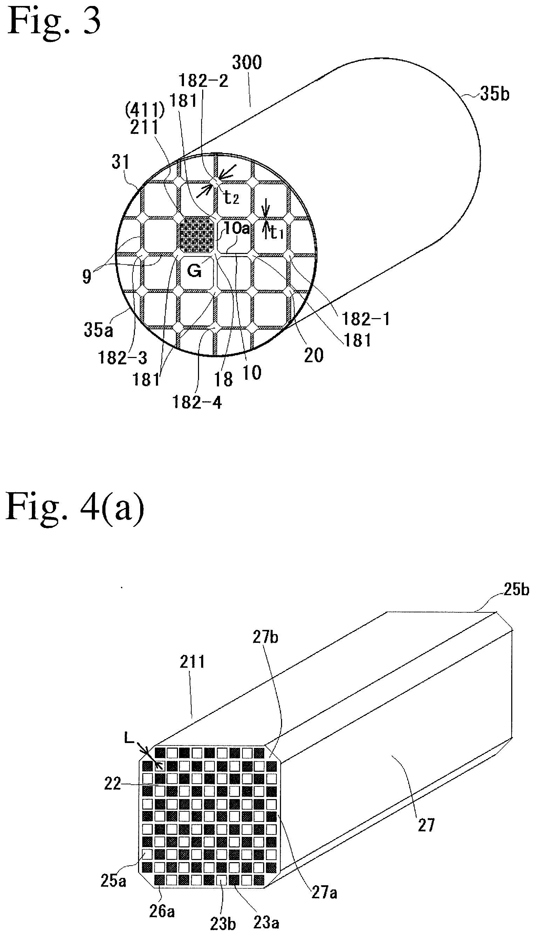

The second silicon carbide honeycomb filter 200 shown in Fig. 2 comprises honeycomb segments 211 having a shape shown in Fig. 4(a), which are arranged via lattice gaps, bonding material layers 9 formed in the lattice gaps for bonding the outer peripheral walls 27 of the honeycomb segments 211, and a skin layer 21 enclosing the bonded honeycomb segments 211. Each honeycomb segment 211 has pluralities of cells 23 extending longitudinally from one end surface 25a to the other end surface 25b, and cell walls 22 of each cell 23 form a flow path extending longitudinally from one end surface 25a to the other end surface 25b. One or both end portions of the cells 23 on the side of the end surfaces 25a, 25b are provided with plugs 26a, 26b. To prevent both ends of each cell 23 from being sealed by the plugs 26a, 26b, the plugs 26a, 26b are arranged alternately in a checkerboard pattern on each end surface 25a, 25b.

A cross section shape of each honeycomb segment 211 perpendicular to the flow path direction is an octagon having a chamfer at each corner. In order that the honeycomb segments 211 are easily bonded, each angle of a quadrilateral defining the contour of the honeycomb segment 211 is preferably 90°, and all sides of the quadrilateral more preferably have equal length. Also, the chamfer is preferably linear, and more preferably linear with the inclination of 45° to the sides of the quadrilateral. Namely, the cross section shape of each honeycomb segment 211 perpendicular to the flow path direction is preferably an octagon provided with a linear chamfer having the inclination of 45° at each corner of a quadrilateral, and more preferably an octagon provided with a linear chamfer having the inclination of 45° at each corner of a square.

The octagonal outer wall of each honeycomb segment 211 is constituted by long first outer peripheral walls 27a corresponding to the sides of the quadrilateral and short second outer peripheral walls 27b corresponding to the chamfers. By bonding pluralities of honeycomb segments 211 having such octagonal outer walls in four directions, lattice gaps having intersections defined by opposing four second outer peripheral walls 27b are formed between the honeycomb segments 211.

Because adjacent second outer peripheral walls 27b are separate from each other by the width of the lattice gap, the cross section of the intersection may have various shapes in other portions than the second outer peripheral walls 27b. However, the cross section shape of a space formed in the intersection is determined by the cross section shape of a rod spacer (described later) placed in the intersection. Accordingly, the contour of the intersection need not be defined in portions of the lattice gaps, but is simply defined as "a shape whose contour is constituted by four second outer peripheral walls 27b."

The second silicon carbide honeycomb filter is characterized by having vacant intersection spaces 20 free of a bonding material in the intersections of lattice gaps, with bonding material layers 9 having a thickness t₁ formed in lattice gap portions between opposing first outer peripheral walls 27a. As described above, the cross section shape of the vacant intersection space 20 is determined by the cross section shape of a rod spacer receivable in the intersection defined by the second outer peripheral walls 27b. For example, when the rod spacer has a square or circular cross section in contact with the second outer peripheral walls 27b, the resultant vacant intersection space 20 has a square or circular cross section. In any case, each vacant intersection space 20 preferably extends longitudinally from one end surface 25a to the other end surface 25b.

During the production, the rod spacer need not be in contact with upper two second outer peripheral walls 27b, though it is in contact with lower two second outer peripheral walls 27b. However, in order that the vacant intersection space 20 has the maximum cross section area to prevent cracking sufficiently, the vacant intersection space 20 is preferably in contact with all second outer peripheral walls 27b. Because a gap within size tolerance is permitted, it is described herein that "the vacant intersection space 20 is preferably substantially in contact with the second outer peripheral walls 27b."

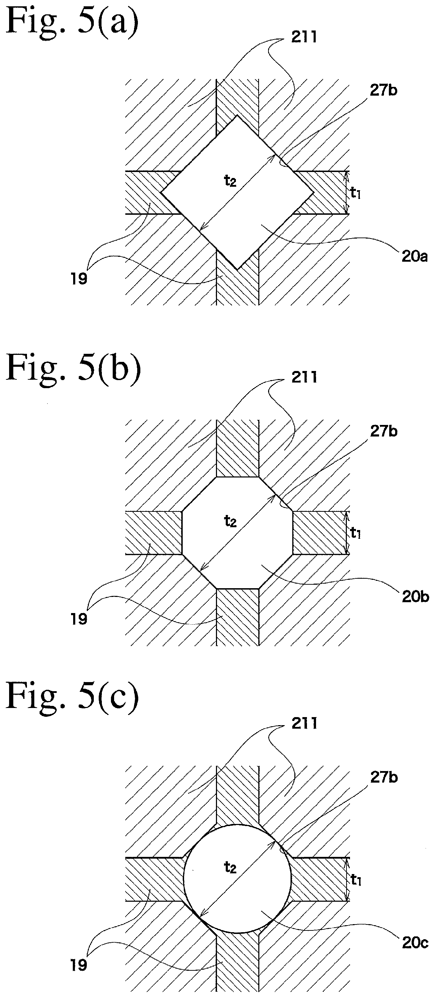

Figs. 5(a), 5(b) and 5(c) show a vacant intersection space 20a having a square cross section, a vacant intersection space 20b having an octagonal cross section, and a vacant intersection space 20c having a circular cross section, respectively.

The vacant intersection space 20a shown in Fig. 5(a) has a square cross section, in which all sides in contact with the second outer peripheral walls 27b are connected in the bonding material layers 19. Thus, the vacant intersection space 20a has the largest cross section area of t₂² among the above three vacant intersection spaces 20a, 20b, 20c. The ratio (space ratio t₂/t₁) of the gap t₂ (pore diameter) between opposing two second outer peripheral walls 27b to the thickness t₁ of the bonding material layer 19 is preferably more than 1.4. The space ratio t₂/t₁ of 1.4 or less is insufficient in preventing the propagation of cracking. The space ratio t₂/t₁ is preferably 1.5 or more, and more preferably 2 or more. On the other hand, too large a space ratio t₂/t₁ unpreferably reduces the strength of the honeycomb filter. The space ratio t₂/t₁ is preferably 7 or less, more preferably 5 or less, and most preferably 4 or less. Accordingly, the range of the space ratio t₂/t₁ in the vacant intersection space 20a having a square cross section is generally more than 1.4 and 7 or less, preferably 1.5-5, and more preferably 2-4. Because the space ratio t₂/t₁ is more than 1.4, the cross section area of the vacant intersection space 20a is more than 1.4 t₁ × 1.4 t₁ = 1.96 t₁².

The vacant intersection space 20b having an octagonal cross section as shown in Fig. 5(b) is constituted by four sides each having a length in contact with the second outer peripheral wall 27b, and sides in the width directions of the bonding material layers 19, having a cross section area of (t₂² - t₁²). This formula of a cross section area indicates that the vacant intersection space 20b does not have a sufficient cross section area unless t₂ is sufficiently larger than t₁. Accordingly, the space ratio t₂/t₁ is preferably 1.7 or more, more preferably 2 or more, and most preferably 2.5 or more. Similarly to the square cross section, the upper limit of the space ratio t₂/t₁ is preferably 7, more preferably 5, and most preferably 4. Accordingly, the range of the space ratio t₂/t₁ in the vacant intersection space 20b having an octagonal cross section is preferably 1.7-7, more preferably 2-5, and most preferably 2.5-4. With the space ratio t₂/t₁ in the above range, the vacant intersection space 20b having an octagonal cross section has a sufficiently large cross section area without intruding into the bonding material layers 19, surely having sufficient cross section area and bonding strength for suppressing cracking.

Because the vacant intersection space 20c having a circular cross section, which is shown in Fig. 5(c), has a diameter in contact with the second outer peripheral wall 27b, the vacant intersection space 20c has a cross section area of (π/4) t₂². In order that the vacant intersection space 20c surely has a sufficient cross section area, the space ratio t₂/t₁ is preferably 1.5 or more, more preferably 2 or more, and most preferably 2.5 or more. Similarly to the square cross section, the upper limit of the space ratio t₂/t₁ is preferably 7, more preferably 5, and most preferably 4. Accordingly, the range of the space ratio t₂/t₁ in the vacant intersection space 20c having a circular cross section is preferably 1.5-7, more preferably 2-5, and most preferably 2.5-4. With the space ratio t₂/t₁ in the above range, the vacant intersection space 20c having a circular cross section has a sufficiently large cross section area with substantially no intrusion into the bonding material layers 19, surely having sufficient cross section area and bonding strength for suppressing cracking.

Summarizing the space ratios t₂/t₁ of all vacant intersection spaces having the above cross section shapes, their ranges are generally more than 1.4 and 7 or less, preferably 1.5-5, and more preferably 2-4.

To suppress cracking whichever portion of each honeycomb segment 211 is subjected to local temperature elevation due to the burning of unevenly accumulated PM, the percentage of the vacant intersection spaces 20 to all intersections in each honeycomb segment 211 is preferably 30% or more, more preferably 50% or more, and most preferably 70% or more. The upper limit of the percentage of the vacant intersection spaces 20 is preferably 100% of all intersections, though it may be 95% or less.

With the above structure, there is no bonding material in the vacant intersection spaces 20. Accordingly, even when thermal shock is generated by the burning of unevenly accumulated PM, the rapid temperature change of an exhaust gas, etc., the thermal stress of the honeycomb segments 211 can be reduced while keeping enough heat conduction between the honeycomb segments, so that cracking is unlikely to occur in the honeycomb filter 100. Further, the propagation of cracking, if any, is suppressed by the vacant intersection spaces 20.

In each honeycomb segment 211, a thicker outer peripheral wall 27 than the cell walls 22 is preferable, because it provides the honeycomb segment 211 with larger heat capacity, making it resistant to cracking due to thermal shock. The thickness of the outer peripheral wall 27 is more preferably 1.3 times or more, further preferably 1.6 times or more, and most preferably 2 times or more, the thickness of the cell walls 22. To suppress the increase of pressure loss, the thickness of the outer peripheral wall 27 is preferably 10 times or less, and more preferably 9 times or less, the thickness of the cell walls 22.

The honeycomb segment 211 preferably does not have flow paths at corners having the second outer peripheral wall 27b. Accordingly, the second outer peripheral wall 27b at each corner preferably has a triangular shape 271 having a vertex P on the center side of the honeycomb segment 211 as shown in Fig. 4(b). In this case, the maximum thickness L of each second outer peripheral wall 27b in a radial direction (distance between the outer peripheral surface 27b' of the second outer peripheral wall 27b and the vertex P) is larger than the thickness of the first outer peripheral wall 27a. Particularly when the honeycomb segment 211 has an octagonal shape having a linear chamfer having an inclination of 45° at each corner, the triangular shape 271 is an isosceles right triangle having the outer peripheral surface 27b' as a base, whose maximum thickness L is a half of the length of the outer peripheral surface 27b' of the second outer peripheral wall 27b. With such shape, the honeycomb segment 211 has such large heat capacity that cracking can be suppressed even when local temperature elevation is generated in the honeycomb segment 211 by the burning of unevenly accumulated PM.

As shown in Fig. 6, in a cross section of the honeycomb segment 411 perpendicular to the flow path direction of cells, the cross section area of the introducing cell 43b whose outlet-side end surface is sealed may be larger than that of the discharging cell 43a whose inlet-side end surface is sealed. This can increase the amount of PM captured until regeneration is started, while suppressing pressure loss when PM is captured. The cross section area of the introducing cell 43b is preferably 1.1-2.0 times, and more preferably 1.2-1.9 times, that of the discharging cell 43a.

To prevent PM in the exhaust gas from flowing out without being captured, one or both of the end surfaces 25a, 25b of the vacant intersection spaces 20 are preferably sealed by plugs (not shown).

### (2-2) Production method

### (a) Production of honeycomb segments

The production material of honeycomb segments may be the same as in the first silicon carbide honeycomb filter, and the production method may also be the same except for changing a die to form a green body for the honeycomb segment 211 shown in Fig. 4(a).

### (b) Production of honeycomb filter

The bonding material slurry may be the same as used for the first silicon carbide honeycomb filter. The bonding material slurry is applied to the outer wall 27 of each honeycomb segment 211, and the honeycomb segments 211 are bonded by pressing to each other via a bonding material as shown in Fig. 2. To prevent the bonding material from intruding into the predetermined intersections in lattice gaps between the honeycomb segments 211, a rod spacer having the same size as that of each intersection and the same length as that of each honeycomb segment 211 is placed in each intersection. The rod spacer is preferably made of easily burnable wood, paper, resins, etc.

After drying the bonding material layers bonding the honeycomb segments 211, sintering is conducted at a temperature of 1100-1350°C in an oxidizing atmosphere, thereby burning off the rod spacers to form the vacant intersection spaces 20. The outer peripheral surface of the resultant sintered body is machined to a circular shape by a lathe.

Plugs (not shown) of 1-2 mm in depth are formed in the vacant intersection spaces 20 on one or both sides of the end surfaces 25a, 25b. The circularly machined outer peripheral surface is coated with a skin layer material containing at least silicon carbide particles and an inorganic binder to form a skin layer 11, which is dried to obtain the second silicon carbide honeycomb filter 200.

### [3] Third silicon carbide honeycomb filter

### (3-1) Structure

The third silicon carbide honeycomb filter 300 comprises honeycomb segments 211 having the shape shown in Fig. 4(a) and arranged via lattice gaps, bonding material layers 9 formed in the lattice gaps to bond the outer peripheral walls 27 of the honeycomb segments 211, and a skin layer 31 enclosing the bonded honeycomb segments 211, so that it has a structure in which the first silicon carbide honeycomb filter 100 and the second silicon carbide honeycomb filter 200 are combined as shown in Fig. 3. Each honeycomb segment 211 per se may be the same as in the second silicon carbide honeycomb filter 200.

The third silicon carbide honeycomb filter 300, in which the honeycomb segments 211 each having a chamfer at each corner are arranged via the lattice gaps, has a bonding-material-free region 10 extending in a cross pattern from the center intersection 18, and vacant intersection spaces 20 located at the intersections of the lattice gaps.

The bonding-material-free region 10 may be the same as in the first silicon carbide honeycomb filter 100. As in the first silicon carbide honeycomb filter 100, the center intersection 18 is located at the center axis G of the honeycomb filter 100 or its nearby position. Though each branch 10a, 10a, 10a, 10a of the bonding-material-free region 10 preferably extends between the center intersection 18 and adjacent intersections 181, 181, 181, 181 as shown in Fig. 3, the bonding-material-free region 10 may be extended to an area from the center intersection 18 to the second next adjacent intersections 182-1, 182-2, 182-3, 182-4, if necessary.

The vacant intersection spaces 20 may be the same as in the second silicon carbide honeycomb filter 200. The ratio (space ratio t₂/t₁) of the vacant intersection space 20 to the thickness t₁ of the bonding material layer 9 formed between the first outer peripheral walls 27a of the honeycomb segments 211 is preferably more than 1.4.

Because no bonding material exists not only in a center portion of a honeycomb filter in which the temperature is likely elevated most but also in the intersections of lattice gaps in the above structure, thermal stress generated in the honeycomb segments 211 can be easily alleviated, thereby making the honeycomb filter 300 resistant to cracking, while maintaining heat conduction between the honeycomb segments, even when thermal shock is generated by the burning of unevenly accumulated PM, the rapid temperature change of an exhaust gas, etc. Also, the propagation of cracking if any can be suppressed by the vacant intersection spaces 20.

As in the first and second silicon carbide honeycomb filters, in a cross section perpendicular to the flow path direction, the cross section areas of exhaust-gas-introducing cells 43b are preferably larger than those of exhaust-gas-discharging cells 43a as shown in Fig. 6. This increases the amount of PM accumulated until regeneration starts, and suppresses pressure loss when PM is captured. The cross section area of each exhaust-gas-introducing cell 43b is preferably 1.1-2.0 times, and more preferably 1.2-1.9 times that of each exhaust-gas-discharging cell 43a.

To prevent PM in the exhaust gas from flowing out, one or both end surfaces 25a, 25b of each bonding-material-free region 10 and each vacant intersection space 20 may be sealed by plugs (not shown).

### (3-2) Production method

To prevent a bonding material from intruding into a cross gap between the center intersection 18 and adjacent intersections 181, 181, 181, 181, and intersections formed by the second outer peripheral walls 27b of the honeycomb segments 211, plate spacers each having the same thickness as that of the lattice gap and the same length as that of the honeycomb segment 211 are placed in the cross gap between the center intersection 18 and adjacent intersections 181, 181, 181, 181, and rod spacers each having the same size as that of each intersection and the same length as that of the honeycomb segment 211 are placed in the intersections of the lattice gaps. As in the first or second silicon carbide honeycomb filter 100, 200 except them, the outer peripheral walls 27 of the honeycomb segments 211 are coated with a bonding material slurry to bond the honeycomb segments 211. At this time, as in the second silicon carbide honeycomb filter 200, the center intersection 18 of the honeycomb segments 211 is aligned with the center axis G of the honeycomb filter or its nearby position. The plate spacers and rod spacers are preferably made of easily burnable wood, paper, resins, etc. Each plate spacer may have a size occupying an area from the center intersection 18 to the second next adjacent intersections 182-1, 182-2, 182-3, 182-4.

After drying the bonding material layers 9 formed in the lattice gaps, sintering is conducted at a temperature of 1100-1350°C in an oxidizing atmosphere to burn off the plate spacers and the rod spacers, thereby forming the bonding-material-free region 10 and the vacant intersection spaces 20. The outer peripheral surface of the resultant sintered body is machined to a circular shape by a lathe.

Plugs (not shown) of 1-2 mm in depth are formed in the bonding-material-free region 10 and the vacant intersection spaces 20 on one or both sides of the end surfaces 35a, 35b. The circularly machined outer peripheral surface is coated with a skin layer material comprising at least silicon carbide particles and an inorganic binder to form a skin layer 11, which is then dried to provide the third silicon carbide honeycomb filter.

The present invention will be explained in further detail referring to Examples below, without intention of restricting the present invention thereto.

### Example 1

A molding material comprising 100% by mass of silicon carbide particles, 5.9% by mass of alumina particles and 4.1% by mass of magnesium hydroxide particles was mixed with 10% by mass of hydroxypropyl methylcellulose as an organic binder, and the resultant mixture was blended with water in an amount of 35% by mass per 100% by mass of the molding material to form a plasticizable moldable material. The plasticizable moldable material was extrusion-molded through a die of a screw-molding machine, to form a honeycomb segment green body having a square cross section as shown in Fig. 8, which was dried at 120°C for 2 hours by a hot-air dryer. Thereafter, plugs 16a, 16b for sealing the end surfaces 15a, 15b of cells 13 of the honeycomb segment green body alternately in a checkerboard pattern were formed by a plugging material having the same composition as that of the moldable material. After drying the plugs 16a, 16b, sintering was conducted at a temperature of 1300°C in an oxidizing atmosphere, to obtain a honeycomb segment 111 having plugs. The honeycomb segment 111 had a square cross section of 35 mm in each side, and an entire length of 203 mm.

100% by mass of silicon carbide particles were blended with 5.9% by mass of alumina particles, 4.1% by mass of magnesium hydroxide particles, 4.0% by mass of a foamed resin as a pore-forming material, 8.0% by mass of colloidal silica, 10% by mass of hydroxypropylmethyl cellulose as an organic binder, and 30% by mass of water, to from a bonding material slurry.

To prevent the bonding material slurry from intruding into gaps at the center axis G of the honeycomb filter or its vicinity, wood plate spacers each having the same thickness as that of the lattice gap between the honeycomb segments 111 and the same length as that of the honeycomb segment 111 were attached in advance to the outer peripheral walls of the honeycomb segments 111 constituting a cross gap between the center intersection 18 of the lattice gaps and adjacent intersections 181, 181, 181, 181. Thereafter, the bonding material slurry was applied to the outer peripheral walls 17 of the honeycomb segments 111, and 6 × 6 honeycomb segments 111 were pressed to each other via the bonding material slurry for bonding as shown in Fig. 1.

After drying the resultant bonding material layers 9, sintering was conducted at a temperature of 1300°C in an oxidizing atmosphere to burn off the wood plate spacers. An outer peripheral surface of the resultant sintered body was machined to a circular shape by a lathe. A circularly machined outer peripheral surface of the honeycomb filter was coated with a skin layer material comprising silicon carbide particles and colloidal silica, and then dried. Plugs (not shown) of 1 mm in depth were formed on end surfaces 15a on one side of the bonding-material-free region 10 of the honeycomb filter. The resultant silicon carbide honeycomb filter 100 having the bonding-material-free region 10 had an outer diameter of 190 mm, an entire length of 203 mm, an outer peripheral wall thickness of 0.7 mm, a cell wall thickness of 8 mil (0.20 mm), a cell density of 300 cpsi (46.5 cells/cm²), and a bonding material layer thickness of 2 mm.

Using this silicon carbide honeycomb filter 100, a drop-to-idle test comprising the following steps was conducted. First, combustion soot having an average particle diameter of 0.11 µm was supplied at a rate of 1.57 g/h to the honeycomb filter fixed to a test stand with air at a flow rate of 4.5 Nm³/min, such that the amount of soot deposited reached 6 g per 1 liter of the filter. To follow a drop-to-idle state in which a vehicle quickly stopped at a top of an upward slope, a combustion gas was caused to flow through the honeycomb filter with the temperature control shown in Fig. 10. When the temperature at the honeycomb filter inlet became 600°C, combustion was stopped to have the highest temperature inside the filter. Thereafter, the honeycomb filter 100 was detached to examine whether or not damage occurred in the honeycomb filter 100. As a result, it was confirmed that no cracking occurred in the silicon carbide honeycomb filter 100 of Example 1.

### Example 2

A moldable material prepared in the same manner as in Example 1 was extruded through a die of a screw-molding machine, to form a honeycomb segment green body having an octagonal cross section with a linear chamfer having an inclination angle of 45° at each corner of a square, the cross section areas of introducing cells being larger than those of discharging cells as shown in Fig. 6. The honeycomb segment green body was dried a 120°C for 2 hours by a hot-air dryer. A plugging material having the same composition as that of the moldable material was charged into end portions of cells 43 of the honeycomb segment green body on the side of end surfaces 45a, 45b alternately in a checkerboard pattern, and then dried to form inlet-side plugs 46 and outlet-side plugs 46.

With a bonding material slurry prepared in the same manner as in Example 1 applied to outer peripheral surfaces of the first outer peripheral walls 47a of the honeycomb segments 411, 6 × 6 honeycomb segments 411 were press-bonded to each other via a bonding material as shown in Fig. 2. At this time, wood rod spacers each having a square cross section with the same length as that of the honeycomb segment 411 were placed in all intersections in advance, to prevent the bonding material from intruding into intersections whose contours are formed by the second outer peripheral walls 47b of the bonded honeycomb segments 411. The length of each side of a square cross section of the wood rod spacer was about 7 mm (the length of the second outer peripheral wall 47b + the thickness t₁ of the bonding material layer × 2^{1/2}).

After drying the bonding material, sintering was conducted at a temperature of 1300°C in an oxidizing atmosphere to burn off the wood rod spacers, thereby forming vacant intersection spaces 20 each having a square cross section and longitudinally extending from one end surface 45a to the other end surface 45b. Each vacant intersection spaces 20 had a space diameter t₂ of 7 mm.

The outer peripheral surface of the resultant sintered body was machined to a circular shape by a lathe. Plugs 46 having a depth of 1 mm were formed in the end portions of the vacant intersection spaces 20 on the side of one end surface 45a, and a skin layer material comprising silicon carbide particles and colloidal silica was applied to the circularly machined outer peripheral surface and then dried, to obtain a silicon carbide honeycomb filter 200 having vacant intersection spaces 20.

The silicon carbide honeycomb filter 200 had an outer diameter of 190 mm and an entire length of 203 mm. Each honeycomb segment 411 had an octagonal cross section with a linear chamfer having an inclination angle of 45° at each corner of a square of 35 mm in each side, the first outer peripheral wall 47a having a length of 30 mm and a thickness of 0.7 mm, and the second outer peripheral wall 47b having a length of 4 mm and the maximum thickness L of 2 mm. Also, each honeycomb segment 411 had a cell wall thickness of 8 mil (0.20 mm) and a cell density of 300 cpsi (46.5 cells/cm²). In the honeycomb segment 411, the cross section areas of introducing cells 43b were 1.58 times those of discharging cells 43a. The thickness t₁ of the bonding material layers 9 was 2 mm.

By the same drop-to-idle test as in Example 1, it was confirmed that no cracking occurred in the silicon carbide honeycomb filter 200 of Example 2.

### Example 3

A moldable material prepared in the same manner as in Example 1 was extruded through a die of a screw-molding machine, to form a honeycomb segment green body having the shape shown in Fig. 6. After drying the honeycomb segment green body at 120°C for 2 hours by a hot-air dryer, plugs 46 having the same composition as that of the moldable material were formed on the end surfaces 45a, 45b of cells 43 alternately in a checkerboard pattern. Each honeycomb segment 411 had an octagonal cross section with a linear chamfer having an inclination angle of 45° at each corner of a square of 35 mm in each side, the length of the first outer peripheral wall 47a being 30 mm, the length of the second outer peripheral wall 47b being 4 mm, and the entire length being 203 mm. Also, the thickness of the first outer peripheral wall 47a was 0.7 mm, and the maximum thickness L of the second outer peripheral wall 47b was 2 mm. The honeycomb segment 411 had a cell structure in which the cross section areas of the introducing cells 43b were 1.58 times those of the discharging cells 43a.

With a bonding material slurry prepared in the same manner as in Example 1 applied to the outer peripheral surfaces of the first outer peripheral walls 47a of the honeycomb segments 411, 6 × 6 honeycomb segments 411 were press-bonded to each other via a bonding material as shown in Fig. 3. At this time, (a) wood plate spacers having the same thickness as that of the lattice gaps and the same length as that of the honeycomb segment 411 were placed in advance in a cross gap between the center intersection 18 of lattice gaps between the honeycomb segments 411 and adjacent intersections 181, 181, 181, 181, and (b) wood rod spacers each having a square cross section with the same length as that of the honeycomb segment 411 were placed in advance in all intersections whose sides are formed by the second outer peripheral walls 47b of the bonded honeycomb segments 411. The wood rod spacer had a square cross section of about 7 mm in each side (the length of the second outer peripheral wall 47b + the thickness t₁ of the bonding material layer × 2^{1/2}).

After drying the bonding material, sintering was conducted at a temperature of 1300°C in an oxidizing atmosphere to burn off the wood plate spacers and the wood rod spacers, thereby forming a bonding-material-free region 10 having a cross-shaped cross section and vacant intersection spaces 20 each having a square cross section. Each branch 10a, 10a, 10a, 10a of the bonding-material-free region 10 having the same length as that of the first outer peripheral wall 47a in a cross section perpendicular to the flow paths longitudinally extended from one end surface 45a to the other end surface 45b. Also, the vacant intersection spaces 20 longitudinally extended from one end surface 45a to the other end surface 45b, with a space diameter t₂ of 7 mm. The outer peripheral surface of the sintered body was machined to a circular shape by a lathe.

Plugs 46 of 1 mm in depth were formed in the end portions of the bonding-material-free region 10 and the vacant intersection spaces 20 on the side of one end surface 35a, and a skin layer material comprising silicon carbide particles and colloidal silica was applied to the circularly machined outer peripheral surface and then dried, thereby obtaining a silicon carbide honeycomb filter 300 having the bonding-material-free region 10 and the vacant intersection spaces 20. The silicon carbide honeycomb filter 300 had an outer diameter of 190 mm, an entire length of 203 mm, an outer peripheral wall thickness of 0.7 mm, a cell wall thickness of 8 mil (0.20 mm), and a cell density of 300 cpsi (46.5 cells/cm²), the cross section areas of introducing cells being larger than those of discharging cells, and the thickness t₁ of the bonding material layers 9 being 2 mm.

As a result of the same drop-to-idle test as in Example 1, it was confirmed that no cracking occurred in the silicon carbide honeycomb filter of Example 3.

### Comparative Example 1

A moldable material prepared in the same manner as in Example 1 was extruded through a die of a screw-molding machine to form a square-cross-sectioned honeycomb segment green body as shown in Fig. 6. The honeycomb segment green body was dried at 120°C for 2 hours by a hot-air dryer. Plugs 16a, 16b having the same composition as that of the moldable material were formed on the end surfaces 15a, 15b of the cells 13 alternately in a checkerboard pattern, and dried at a temperature of 1300°C in an oxidizing atmosphere. Thereafter, sintering was conducted to obtain a plugged honeycomb segment 111. The honeycomb segment 111 had a square cross section of 35 mm in each side and an entire length of 203 mm.

With a bonding material slurry prepared in the same manner as in Example 1 applied to the outer peripheral walls 17 of the honeycomb segments 111, 6 × 6 honeycomb segments 111 were press-bonded to each other as shown in Fig. 7. After drying the bonding material, sintering was conducted at a temperature of 1300°C in an oxidizing atmosphere, and the outer peripheral surface of the resultant sintered body was machined to a circular shape by a lathe.

A skin layer material comprising silicon carbide particles and colloidal silica was applied to the circularly machined outer peripheral surface and dried, to obtain a silicon carbide honeycomb filter having an outer diameter of 190 mm, an entire length of 203 mm, an outer peripheral wall thickness of 0.2 mm, a cell wall thickness of 8 mil (0.20 mm), a cell density of 300 cpsi (46.5 cells/cm²), and a bonding material layer thickness of 2 mm.

As a result of the same drop-to-idle test as in Example 1, it was confirmed that cracking occurred in the silicon carbide honeycomb filter of Comparative Example 1.

### DESCRIPTION OF REFERENCE NUMERALS

100, 200, 300, 500, 600: Honeycomb filter
510: Ceramic honeycomb structure
111, 211, 411: Honeycomb segment
9: Bonding material layer
11, 21, 31, 51, 61: Skin layer
12, 22, 52: Cell wall
13a, 23a, 43a, 53a: Inlet-plugged flow path (discharging cell)
13b, 23b, 43b, 53b: Outlet-plugged flow path (introducing cell)
15a, 25a, 45a, 55a: One end surface (inlet-side end surface)
15b, 25b, 45b, 55b: The other end surface (outlet-side end surface)
16a, 26a, 46a: Plug (upstream-side plug)
16b, 26b, 46b: Plug (downstream-side plug)
17, 27: Outer peripheral wall
27a, 47a: First outer peripheral wall
27b, 47b: Second outer peripheral wall
18: Center intersection
181, 182-1, 182-2, 182-3, 182-4: Intersection
10: Bonding-material-free region
20: Vacant intersection space
t₁: Thickness of bonding material layer
t₂: Diameter of vacant intersection space
L : Maximum radial thickness of second outer peripheral wall
G: Center axis of honeycomb filter

## Claims

1. A silicon carbide honeycomb filter constituted by honeycomb segments each comprising cell walls forming cells defining pluralities of flow paths longitudinally extending between both end surfaces, plugs sealing end surfaces of said cells alternately in a checkerboard pattern, and an outer peripheral wall, bonding material layers filling lattice gaps between said honeycomb segments for bonding them, and a skin layer enclosing the bonded honeycomb segments,
said lattice gaps being provided with a bonding-material-free region extending in four directions from a center intersection to adjacent intersections, wherein said center intersection is an intersection located at the center axis of said honeycomb filter or its nearby position among intersections of said lattice gaps.

2. A silicon carbide honeycomb filter constituted by honeycomb segments each comprising cell walls forming cells defining pluralities of flow paths longitudinally extending between both end surfaces, plugs sealing end surfaces of said cells alternately in a checkerboard pattern, an outer peripheral wall, bonding material layers filling lattice gaps between said honeycomb segments for bonding them, and a skin layer enclosing the bonded honeycomb segments,
a cross section of each honeycomb segment perpendicular to its flow path direction having an octagonal shape obtained by providing a quadrilateral with a chamfer at each corner, which is alternately constituted by first outer peripheral walls corresponding to the sides of said quadrilateral, and second outer peripheral walls corresponding to said linear chamfers,
vacant intersection spaces free of said bonding material being formed in the intersections of said lattice gaps between the bonded honeycomb segments, whose contours are formed by said second outer peripheral walls, and
a space ratio (t₂/t₁) defined by a ratio of the diameter t₂ of said vacant intersection space to the thickness t₁ of the bonding material layer between said first outer peripheral walls being more than 1.4.

3. A silicon carbide honeycomb filter constituted by honeycomb segments each comprising cell walls forming cells defining pluralities of flow paths longitudinally extending between both end surfaces, plugs sealing end surfaces of said cells alternately in a checkerboard pattern, and an outer peripheral wall, bonding material layers filling lattice gaps between said honeycomb segments for bonding them, and a skin layer enclosing the bonded honeycomb segments,
said lattice gaps being provided with a bonding-material-free region extending in four directions from a center intersection to adjacent intersections, wherein said center intersection is located at the center axis of said honeycomb filter or its nearby position among the intersections of said lattice gaps,
a cross section of each honeycomb segment perpendicular to its flow path direction having an octagonal shape obtained by providing a quadrilateral with a chamfer at each corner, which is alternately constituted by first outer peripheral walls corresponding to the sides of said quadrilateral and second outer peripheral walls corresponding to said linear chamfers,
vacant intersection spaces free of said bonding material being formed in the intersections of said lattice gaps between the bonded honeycomb segments, whose contours are formed by said second outer peripheral walls, and
a space ratio (t₂/t₁) defined by a ratio of the diameter t₂ of said vacant intersection space to the thickness t₁ of the bonding material layer between said first outer peripheral walls being more than 1.4.

4. The silicon carbide honeycomb filter according to claim 2, wherein said vacant intersection spaces occupy 30% or more of all intersections.

5. The silicon carbide honeycomb filter according to claim 3, wherein said vacant intersection spaces occupy 30% or more of all intersections.

6. The silicon carbide honeycomb filter according to claim 2, wherein said space ratio is 1.5-5.

7. The silicon carbide honeycomb filter according to claim 3, wherein said space ratio is 1.5-5.

8. The silicon carbide honeycomb filter according to claim 1, wherein said outer peripheral wall of each honeycomb segment is thicker than said cell walls.

9. The silicon carbide honeycomb filter according to claim 2, wherein said outer peripheral wall of each honeycomb segment is thicker than said cell walls.

10. The silicon carbide honeycomb filter according to claim 3, wherein said outer peripheral wall of each honeycomb segment is thicker than said cell walls.

11. The silicon carbide honeycomb filter according to claim 2, wherein a cross section of said second outer peripheral wall perpendicular to its flow path direction has a triangular shape constituted by two cell walls extending vertically and horizontally and closest to said second outer peripheral wall and an outer peripheral surface of said second outer peripheral wall, and the radial maximum thickness of said second outer peripheral wall defined by the distance between the center vertex of said triangular shape and said outer peripheral surface is larger than the thickness of said first outer peripheral wall.

12. The silicon carbide honeycomb filter according to claim 3, wherein a cross section of said second outer peripheral wall perpendicular to its flow path direction has a triangular shape constituted by two cell walls extending vertically and horizontally and closest to said second outer peripheral wall and an outer peripheral surface of said second outer peripheral wall, and the radial maximum thickness of said second outer peripheral wall defined by the distance between the center vertex of said triangular shape and said outer peripheral surface is larger than the thickness of said first outer peripheral wall.

13. The silicon carbide honeycomb filter according to any one of claims 1-12, wherein in a cross section perpendicular to the flow path direction, the cross section area of an introducing cell whose outlet-side end surface is sealed is larger than the cross section area of a discharging cell whose inlet-side end surface is sealed.
